# FASCICULE DE BREVET EUROPEEN

(11) **EP 0 602 206 B1**
(45) Date de publication et mention de la délivrance du brevet: **21.10.1998**
(21) Numéro de dépôt: 93913177.7
(22) Date de dépôt: 23.06.1993
(51) Int. Cl.: B01J 20/04, B01D 53/34

(54) **NOUVELLE COMPOSITION ABSORBANTE D'OXYDES DE SOUFRE ET UTILISATION ASSOCIEE**
Neues Absorptionsmittel für Schwefeloxide und dessen Anwendung
NOVEL SULPHUR OXIDE ABSORBANT COMPOSITION AND USE THEREOF

(30) Priorité: 29.06.1992 FR 9208076
(43) Date de publication de la demande: 22.06.1994
(73) Titulaire: INSTITUT FRANCAIS DU PETROLE, 92506 Rueil-Malmaison Cédex (FR)
(72) Inventeur: MARTIN, Gérard, F-78500 Sartrouville (FR); NOUGIER, Luc, F-78110 Le Vésinet (FR)
(86) Numéro de dépôt international: FR9300624
(87) Numéro de publication internationale: WO9400230

(56) Documents cités:
- EP-A- 0 215 709
- DE-A- 1 962 587
- DE-A- 2 000 059
- US-A- 4 381 991
- US-A- 4 492 677
- US-A- 4 918 036

## Description

La présente invention concerne des compositions absorbantes d'oxydes de soufre, régénérables et utilisables préférentiellement dans des générateurs thermiques utilisant notamment des combustibles à haute teneur en soufre.

Les compositions absorbantes selon la présente invention peuvent être mises en oeuvre dans les générateurs thermiques qui assurent, par exemple, la production de vapeur ou de fluides chauds. Elles peuvent ainsi être employées dans des chaudières de récupération de chaleur de procédé, comme celles que l'on trouve par exemple en aval des régénérateurs de FCC.

Le fonctionnement des générateurs de chaleur n'est autorisé que si les effluents qu'ils rejettent à l'atmosphère sont épurés de la plupart des polluants contenus initialement dans les effluents.

En effet, des réglementations sévères limitent dans la plupart des pays industrialisés les émissions d'oxydes de soufre.

Différentes façons de réduire les émissions d'oxyde de soufre par des générateurs thermiques ont donc déjà été proposes.

Ainsi, une technique connue vise à injecter des absorbants, généralement d'origine calcique directement dans la chambre de combustion. Une autre technologie préconise une injection d'absorbant dans une zone spécifique située en aval de la chambre de combustion. Il est encore connu de capter le soufre, à basse température, dans un autre dispositif spécifique situé en aval des surfaces d'échange de chaleur.

Le traitement des effluents en aval des surfaces d'échange donne de bons résultats mais coûte généralement plus cher que les autres traitements classiques réalisés directement dans la chaudière. En outre, cette technologie implique un volume plus important de l'ensemble qui n'est plus compact.

Il est encore connu par exemple par le brevet FR-A-2,363,720 de réaliser une désulfuration in situ dans une chambre spécifique intégrée au générateur de chaleur. Cette technologie conduit à des résultats intéressants tant au plan du rendement de captation du soufre, qu'à celui des coûts d'investissement et des coûts opératoires.

L'absorbant utilisé dans ce dernier type de chaudière consiste essentiellement en une matière calcique qui est rejetée après utilisation. A terme, l'absorbant usé risque de poser des problèmes de stockage et/ou de mise en décharge, d'une part à cause de l'importance des volumes rejetés, d'autre part parce que l'absorbant usé renferme des substances nocives pour l'environnement telles que des métaux lourds issus de la combustion.

Afin de pallier le problème des volumes à stocker, il a été proposé dans la demande de brevet Français publiée sous le numéro FR-2.671.855 et déposée au nom de la Demanderesse, d'employer des absorbants opérant à plus basse température et régénérables, c'est-à-dire capables de retrouver leur état d'origine après avoir capté des oxydes de soufres. Les absorbants ainsi utilisés sont principalement des absorbants magnésiens pulvérulents comme la dolomie, l'oxyde de magnésium, ou encore le carbonate de magnésium...

L'installation nécessaire à la mise en oeuvre de tels absorbants comprend une chambre de désulfuration intégrée à la chaudière et placée dans une zone où les températures sont adaptées à l'emploi d'absorbants magnésiens. Une telle installation comprend en outre un moyen spécifique destiné à la régénération de l'absorbant usé, et des moyens destinés à traiter l'absorbant et/ou les gaz de régénération.

La présente invention vise à améliorer les absorbants utilisés dans ce type d'installation, notamment par une réduction des volumes d'absorbants mis en oeuvre, par un meilleur rendement de désulfuration et par une diminution de l'usure mécanique des surfaces en contact avec la composition absorbante.

La quantité d'absorbant consommée par un générateur thermique mettant en oeuvre la présente invention peut être réduite d'un facteur compris entre 10 et 1.000, le plus souvent entre 50 et 200.

Dans le domaine du craquage catalytique de charges pétrolières lourdes contenant du soufre, il est utilisé des masses dites de transfert qui permettent de capter dans le ou les régénérateurs, le soufre libéré pendant la combustion du coke déposé sur le catalyseur. De retour dans le réacteur de craquage et le strippeur, ces masses de transfert libèrent, essentiellement sous forme d'hydrogène sulfuré, le soufre capté dans le ou les régénérateur(s).

Indépendamment ou en complément des masses de transfert, les effluents de régénération issus du craquage catalytique peuvent être traités dans un dispositif approprié destiné à en extraire les oxydes de soufre. La demande de brevet publiée sous le numéro FR-2.674.766 divulgue une technologie de ce type qui évite les rejets nocifs d'oxydes de soufre à l'atmosphère grâce à l'utilisation d'une masse absorbante dans un lit entraîné.

Dans le même domaine, le brevet US-4,963,520 décrit une formulation de masse de transfert, sur la base d'une spinelle MgA1₂0₄, à laquelle on ajoute un troisième métal qui facilite l'oxydation de SO₂ en SO₃ et un quatrième métal qui facilite la réduction de la masse. Pour être employée dans les craqueurs catalytiques, la masse doit avoir des caractéristiques géométriques semblables à celles du catalyseur de craquage lui-même et posséder de très bonnes propriétés de résistance mécanique pour éviter son usure. Le diamètre moyen de ces masses se situe généralement au-dessus de 50 micromètres. Compte tenu de ces contraintes, ce sont donc des produits sophistiqués qui coûtent chers.

Le document US-A-4 381 991 divulgue un absorbant pulvérulant comprenant l'oxyde de magnésium en association avec des métaux rares, par exemple avec le cérium. Bien que ce brevet divulgue, dans un mode de réalisation préféré, la combinaison de l'oxyde de magnésium et le métal de terre rare à l'échelle du grain, la possibilité d'employer un mélange est aussi considéré. L'absorbant connu de ce brevet a une granulométrie préférée entre 20 et 50 micromètres.

La présente invention vise notamment à améliorer les performances de désulfuration en proposant un produit d'un faible coût de fabrication.

Les buts énoncés ci-dessus sont atteints par la présente invention qui concerne une composition absorbante d'oxydes de soufre, composition régénérable et comprenant de façon classique un absorbant pulvérulent de type magnésien.

Selon l'invention, il est ajouté à l'absorbant magnésien pulvérulent connu, une seconde poudre de fine granulométrie contenant au moins un oxyde métallique.

La seconde poudre peut donc être constituée par un seul oxyde métallique.

L'absorbant magnésien présente une granulométrie moyenne inférieure à 10 micromètres, et la poudre ajoutée est de préférence constituée de grains présentant un diamètre inférieur à 50 micromètres.

Le métal de l'oxyde métallique est choisi dans le groupe formé par les métaux suivants : Fe, Cu, Pt, Pd, V, Cr, Ce, Rh, W.

Préférentiellement, l'oxyde métallique est déposé sur un support à base d'un matériau choisi dans le groupe formé par l'alumine, la silice, le zircone.

Un tel support confère à l'oxyde métallique une meilleure résistance au frittage et lui permet de conserver toutes ses propriétés même après une utilisation prolongée.

La composition selon l'invention peut être mise en oeuvre dans des générateurs de chaleur, ou encore dans des chaudières de récupération des procédés de craquage catalytique, tels que définis en tête de la description.

Des essais ont montré que l'apport d'une seconde poudre telle que ci-dessus définie joue un rôle actif dans la phase de désulfuration en facilitant l'oxydation de SO₂ en SO₃ plus réactif d'une part, et dans la phase de réduction de l'absorbant au cours de laquelle on libère le soufre pour l'envoyer dans une chaîne de traitement adaptée, en accélérant le processus de régénération.

La seconde poudre est ajoutée à la première de façon à obtenir un mélange dans lequel la seconde poudre représente de 5 à 70 % et préférentiellement de 10 à 50 % de la masse totale. Outre son action sur l'oxydation du S0₂ en S0₃, la seconde poudre participe également à la captation des oxydes de soufre dans les effluents de combustion.

La formulation objet de l'invention doit être employée dans le réacteur de désulfuration, à des températures comprises entre 400 et 900° C et de préférence entre 600 et 800° C. En dessous de 600° C, les vitesses et les rendements de désulfuration deviennent faibles et au-dessus de 800° C les phénomènes de frittage commencent à détruire les éléments actifs de la formulation, ce qui oblige à un renouvellement plus rapide de l'absorbant dans le générateur thermique.

Selon un exemple de mise en oeuvre de l'invention, un réacteur opérant en lit entraîné est alimenté avec des fumées contenant 2500ppm de SO₂. Le temps de séjour des gaz dans ce réacteur est de l'ordre de 0,5s et la température est maintenue aux alentours de 750°C. Pour désulfurer ces fumées, on introduit la composition absorbante selon l'invention, sous forme pulvérulente. L'injection de ce produit se fait au centre de la veine gazeuse à traiter, avec un injecteur qui assure une dispersion rapide des particules. L'absorbant est constitué par un mélange de deux poudres : de la magnésie MgO et une phase active à base de Cérium disposée sur un support en alumine. Les granulométries moyennes de la magnésie et du support de la phase active sont respectivement de 3 et 20 microns. La teneur en phase active de l'absorbant est de 11 %.

Le débit d'absorbant est réglé de façon à avoir un rapport molaire Mg/S (débit d'absorbant/débit de soufre apporté par les fumées) d'environ neuf. Dans ces conditions, on observe un rendement de désulfuration des fumées de l'ordre de 81 %.

En outre, le mélange constitué par l'absorbant magnésien et la poudre contenant un ou plusieurs oxydes métalliques peut subir un ou plusieurs cycles sulfatation-régénération sans qu'il y ait abaissement sensible du rendement de désulfuration.

L'emploi d'un mélange selon l'invention permet d'envisager différents traitements de l'absorbant usé, ou encore une valorisation ou un recyclage de ces absorbants à des coûts non rédhibitoires, ce qui n'est pas le cas avec les absorbants calciques.

L'emploi de mélanges selon l'invention présente encore d'autres avantages.

Ainsi, la granulométrie des grains étant très faible, les résistances au transfert interne des oxydes de soufre vers les sites actifs sont quasiment annihilées, ce qui permet d'accroître encore les performances de désulfuration par rapport aux systèmes qui utilisent des grains d'une taille plus conséquente. La faible taille des grains est aussi un facteur qui réduit considérablement les risques d'usure mécanique des surfaces traversées par l'absorbant, par rapport aux absorbants de granulométrie plus importante.

L'absence de contraintes sur la résistance mécanique des grains simplifie les processus de fabrication et rendent ces mélanges moins chers que les masses de transfert employées habituellement dans les craqueurs catalytiques.

La masse d'éléments actifs, c'est-à-dire magnésium et oxyde(s) métallique(s) rapportée à la masse totale de l'absorbant, est plus importante selon l'invention, que selon l'art antérieur, de sorte que la mise en oeuvre de mélanges pulvérulents selon l'invention peut se faire en lit entraîné avec récupération en sortie de chaudière au niveau du dépoussiéreur final. La présente invention ne nécessite donc pas une mise en oeuvre lourde, en lit circulant avec constitution d'une phase dense dans le réacteur de désulfuration et prédépoussiérage par cyclones ou séparateurs balistiques, comme dans le cas d'absorbants de plus grosse granulométrie. Il est résulte des coûts nettement moins élevés, aussi bien pour les investissements que pour le fonctionnement.

Un mélange présentant des caractéristiques géométriques particulièrement avantageuses est celui qui comporte par exemple un absorbant magnésien très fin (de granulométrie inférieure à 10 micromètres) et un ou des oxyde(s) métallique(s) supporté(s) par des grains dont la taille se situe entre 20 et 50 micromètres. Dans ce cas, on observe des niveaux d'encrassement nettement moindres des surfaces d'échanges de la chaudière parcourues par le courant d'absorbant.

D'autres modifications et/ou adjonctions pourront être apportées par l'homme de métier à l'objet de la présente demande sans sortir du cadre de la présente invention.

## Revendications

1. Mélange absorbant les oxydes de soufre, régénérable, utilisable dans des générateurs thermiques polycombustibles à lit entraîné et comprenant un absorbant pulvérulent de type magnésien, caractérisé en ce qu'il comporte en outre une poudre de granulométrie inférieure à 50 micromètres contenant au moins un oxyde métallique, le métal de l'oxyde métallique étant choisi dans le groupe formé par les métaux suivants : Fe, Cu, Pt, Pd, V, Cr, Ce, Rh, W, et en ce que l'absorbant magnésien présente une granulométrie moyenne inférieure à 10 micromètres.

2. Mélange selon la revendication 1, caractérisé en ce que l'oxyde métallique est déposé sur un support à base d'un matériau choisi dans le groupe formé par l'alumine, la silice, le zircone.

3. Utilisation du mélange selon l'une quelconque des revendications précédentes à des températures comprises entre 400°C et 900°C, de préférence entre 600 et 800°C.

4. Utilisation du mélange selon l'une quelconque des revendications 1 à 3 dans des unités de craquage catalytique.

## Claims

1. A mixture for absorbing sulphur oxides which can be regenerated and used in multi-fuel, entrained-bed heat generators and consisting of a pulverulent absorbent of the magnesian type characterised in that it also contains a powder with a grain size of less than 50 micrometres containing at least one metal oxide, the metal of the metal oxide being selected from the group comprising the following metals: Fe, Cu, Pt, Pd, V, Cr, Ce, Rh, W, and in that the magnesian absorbent has an average grain size of less than 10 micrometres.

2. A mixture as claimed in claim 1, characterised in that the metal oxide is deposited on a support with a base material selected from the group comprising alumina, silica, zirconia.

3. Use of the mixture as claimed in any one of the preceding claims at temperatures ranging between 400°C and 900°C, preferably between 600 and 800°C.

4. Use of the mixture as claimed in any one of claims 1 to 3 in catalytic cracking units.

## Patentansprüche

1. Schwefeloxide absorbierendes regenerierbares Gemisch, das in thermischen Mehrstoffverbrennungsgeneratoren mit Schleppbett verwendbar ist und ein pulverförmiges Absorptionsmittel vom magnesiumhaltigen Typ umfaßt, dadurch gekennzeichnet, daß es im übrigen ein Pulver von einer Granulometrie unter 50 Mikrometer umfaßt, das wenigstens ein metallisches Oxid enthält, wobei das Metall des metallischen Oxids gewählt ist aus der durch die folgenden Metalle gebildeten Gruppe: Fe, Cu, Pt, Pd, V, Cr, Ce, Rh, W und daß das magnesiumhaltige Absorptionsmittel eine mittlere Granulometrie unterhalb von 10 Mikrometer aufweist.

2. Gemisch nach Anspruch 1, dadurch gekennzeichnet, daß das metallische Oxid abgeschieden wird auf einen Träger auf Basis eines Materials, das gewählt ist aus der durch Aluminiumoxid, Siliciumoxid und Zirkonoxid gebildeten Gruppe.

3. Verwendung des Gemisches nach einem der vorhergehenden Ansprüche bei Temperaturen zwischen 400°C und 900°C, bevorzugt zwischen 600 und 800°C.

4. Verwendung des Gemisches nach einem der Ansprüche 1 bis 3 in katalytischen Krackeinheiten.
